Europäisches Patentamt

European Patent Office

Office européen des brevets

(19)

(11) EP 1 577 658 A1

(12) **EUROPEAN PATENT APPLICATION**
published in accordance with Art. 158(3) EPC

(43) Date of publication:
21.09.2005 Bulletin 2005/38

(51) Int Cl.⁷: $G01N\ 1/00$

(21) Application number: 03782861.3

(86) International application number:
PCT/JP2003/016411

(22) Date of filing: 19.12.2003

(87) International publication number:
WO 2004/059295 (15.07.2004 Gazette 2004/29)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 25.12.2002 JP 2002374350

(71) Applicant: Cluster Technology Co., Ltd
Osaka 577-0836 (JP)

(72) Inventors:
• UEDA, Yasuhiro
  Higashiosaka-shi, Osaka 579-8031 (JP)
• ADACHI, Minoru
  Ikoma-shi, Nara 630-0221 (JP)

(74) Representative: Koepe, Gerd L.
Koepe & Partner,
Robert-Koch-Strasse 1
80538 München (DE)

(54) **METHOD AND DEVICE FOR DISCHARGING LIQUID SPECIMEN**

(57) The present invention provides a method and a device for discharging a liquid specimen capable of controlling the sizes of substances in the liquid specimen. The device of the present invention includes a cylinder having a discharge port for a liquid specimen and a supply port for the liquid specimen and discharging means for discharging the liquid specimen, and a means for generating a non-uniform electric field in an internal space of the cylinder is provided in the cylinder. Using this device for discharging a liquid specimen, the sizes of the target substances in the liquid specimen to be discharged can be controlled by discharging the liquid specimen while generating an appropriate non-uniform electric field in the internal space of the cylinder.

Fig. 1

EP 1 577 658 A1

**Description**

Technical Field

The present invention relates to a method and a device for discharging a liquid specimen capable of controlling the sizes of substances contained in a discharged liquid specimen when discharging the liquid specimen.

Background Art

In order to achieve high quality of printed letters / printed images, various improvements are provided in inkjet printers. For example, the following technique has been proposed: a driving signal that is output once per printing cycle is constituted by a plurality of driving pulses, and one or a plurality of pulses is selected based on printing data containing a pulse selection signal corresponding to each driving pulse, so that ink drops having different weights can be discharged from the same nozzle (e.g., see Japanese Laid-Open Patent Publication No. 10-81012).

On the other hand, in recent years, nanotechnology has been developed, hence molded products requiring high precision, for example, molded products having a microstructure such as semiconductor circuits, substrates for DNA chip, nozzles of an inkjet head, sensors are produced. For example, the smaller the nozzle diameter of an inkjet head is, the larger the amount of information to be processed is possible. With the development of recent processing technologies, nano-processing or hyperfine fabrication technology have been developed, and any complex shapes can be processed, for example, by focused ion beam (FIB) technology (Takeo Tanaka and Osamu Yamada, "Nanoprocessing by FIB (focused ion beam) technology", 2002, MATERIAL STAGE, Vol. 1, No. 11, pp. 18-23).

With such discharge technology and processing technology, various inkjet printer heads capable of controlling the amount (or the size) of a trace amount of liquid drops to be discharged have been developed, and have come to be used not only as a printer head but also for dispensing a trace amount of a specimen.

As the inkjet nozzle, an inkjet nozzle having a structure constituted by a cylinder having a discharge port and a specimen supply port, and liquid drop discharging means provided on the side of the specimen supply port is used. Since the amount of liquid drops that is discharged after passing through this cylinder is small, there may be a variation in the concentration of a substance in the discharged liquid drop due to nozzle clogging caused by aggregation of the substance contained in the liquid drop or due to adsorption of the substance onto the inner wall of the head. For example, in the case of a suspension having a low concentration, a target substance may not be contained in the liquid drop discharged after passing through the cylinder. In such a case, since a uniform liquid specimen cannot be discharged, a measurement error is caused, so that accurate measurement cannot be conducted. Nevertheless, so far there has been no investigation into controlling a substance itself contained in liquid drops to be discharged.

Disclosure of Invention

It is an object of the present invention to provide a method and a device for discharging a liquid specimen capable of controlling the size of a substance in a liquid specimen.

The inventors of the present invention found out that by performing electrical operation, the above problem can be solved and a target substance in a liquid specimen can be discharged efficiently.

The present invention provides a method for discharging a liquid specimen in means for discharging a liquid specimen provided with a cylinder having a discharge port for a liquid specimen and a supply port for the liquid specimen, comprising the step of generating a non-uniform electric field in an internal space of the cylinder to discharge the liquid specimen.

In a preferable embodiment, the liquid specimen is discharged in a form of a liquid drop.

In a more preferable embodiment, the means for discharging a liquid specimen is an inkjet drive device.

In another preferable embodiment, the size of a target substance in the liquid specimen to be discharged can be controlled by changing the non-uniform electric field.

In yet another preferable embodiment, the strength distribution of the non-uniform electric field has a plurality of strong and weak portions.

In a still another preferable embodiment, the non-uniform electric field is a steady electric field.

In a preferable embodiment, in the strength distribution of the non-uniform electric field, the strengths of the strong portions are attenuated and a distance between a strong portion and a weak portion is increased in a direction from the discharge port to the supply port of the cylinder.

In another preferable embodiment, the non-uniform electric field is a traveling-wave electric field.

In yet another preferable embodiment, a cycle of the traveling-wave electric field is equal to a driving cycle of the inkjet drive device, and further that a phase difference between the electric field cycle and the driving cycle is less than one wavelength.

The present invention also provides a device for discharging a liquid specimen comprising a cylinder having a discharge port for a liquid specimen and a supply port for the liquid specimen and discharging means for discharging the liquid specimen provided in a vicinity of the supply port of the cylinder, wherein a means for generating non-uniform electric field in an internal space of the cylinder is provided in the cylinder.

In a preferable embodiment, the discharging means is an inkjet drive device.

In a more preferable embodiment, the means for generating a non-uniform electric field is an electrode for generating a non-uniform electric field, and a plurality of electrodes are provided at a predetermined interval in concentric axis symmetry on an inner wall of the cylinder.

Brief Description of Drawings

Fig. 1 is a schematic view of a device for discharging a liquid specimen of the present invention when discharging a liquid specimen containing biological particles and metal particles.

Fig. 2(a) is a schematic transparent view of one embodiment of the device for discharging a liquid specimen of the present invention in the direction parallel to the axis of the cylinder, and Fig. 2(b) is a schematic cross-sectional view taken along the line A-A' in Fig. 2(a).

Fig. 3(a) is a schematic front view of a cylinder provided with electrodes on its inner wall; Fig. 3(b) is a schematic cross-sectional view taken along the line A-A' of an insulating member in Fig. 3(a), and Fig. 3(c) is a schematic cross-sectional view taken along the line B-B' of a conductive member 20 in Fig. 3(a).

Fig. 4 is a schematic cross-sectional view of a cylinder of the device for discharging a liquid specimen of the present invention when a steady electric field or a traveling-wave electric field is formed by a plurality of electrodes.

Fig. 5 is a schematic cross-sectional view of a cylinder of the device for discharging a liquid specimen of the present invention when an attenuating steady electric field is formed by a plurality of electrodes.

Fig. 6 is a schematic cross-sectional view of a cylinder of the device for discharging a liquid specimen of the present invention when a traveling-wave electric field is formed by a plurality of electrodes.

Best Mode for Carrying Out the Invention

The present invention is characterized in that a target substance in a liquid specimen supplied to a cylinder is electrically captured and gathered in one spot by utilizing dielectrophoresis force, thereby controlling the size of the substance in the liquid specimen. Herein, "dielectrophoresis force" refers to a force that is caused by interaction between polarized charges that are generated as a result of polarization of particles present in a non-uniform electrolytic field, and the non-uniform electrolytic field. The size $F_{DEP}$ of the dielectrophoresis force is

$$F_{DEP} = 2\pi\, a^3\, \varepsilon_m Re[K^*(\omega)] \nabla (E^2) \qquad (1)$$

where a is the radius of a particle, and $K^*(\omega)$ is as follows, using a frequency $\omega$ of an applied voltage:

$$K^*(\omega) = \varepsilon_p{}^* - \varepsilon_m{}^*/\varepsilon_p{}^* + 2\,\varepsilon_m{}^* \qquad (2)$$

where $\varepsilon_p{}^*$ and $\varepsilon_m{}^*$ are:

$$\varepsilon_p{}^* = \varepsilon_p - j\,\sigma_p/\omega \qquad (3)$$

$$\varepsilon_m{}^* = \varepsilon_m - j\,\sigma_m/\omega \qquad (4)$$

where $\varepsilon_p$, $\varepsilon_m$, $\sigma_p$, and $\sigma_m$ are the dielectric constant and the conductivity of the target substance and the object substance, respectively, and a complex quantity in the above equations is denoted by *. In the equation (1), if the following equation (5) is satisfied, the target substance moves to the direction in which the electric field strength is strong (positive dielectrophoresis).

$$Re[K^*(\omega)] > 0 \qquad (5)$$

If the following equation (6) is satisfied, the target substance moves to the direction in which the electric field strength is weak (negative dielectrophoresis).

$$Re[K^*(\omega)] < 0 \qquad (6)$$

As seen from these equations, whether positive dielectrophoresis is generated or negative dielectrophoresis is generated in the target substance depends on the parameters of the frequency of the applied voltage, the conductivity and the dielectric constant of a liquid specimen, and the conductivity and the dielectric constant of a target substance. Therefore, a target substance can be captured and gathered in one spot by regulating the parameters so that negative dielectrophoresis force acts on the specimen.

The present invention can be applied to any substances containing, for example, virus, microorganisms, unicellular organisms, animal cells, plant cells, and biological substances derived therefrom such as DNA and proteins, and metal, ceramics, organic substances and inorganic substances, regardless of the presence or absence of charges of the substance in the liquid specimen.

In the present invention, a "liquid specimen" refers to a liquid to be supplied to a cylinder in which a sample containing a single or a plurality of target substances or various substances are present as it is or in the form of a liquid. More specifically, in the liquid specimen, a target substance as described above is dissolved or suspended in an appropriate medium. The medium can be selected as appropriate in view of the dielectric characteristics. This liquid specimen may contain a substance other than the target substance.

Hereinafter, the present invention will be described with reference to the accompanying drawings.

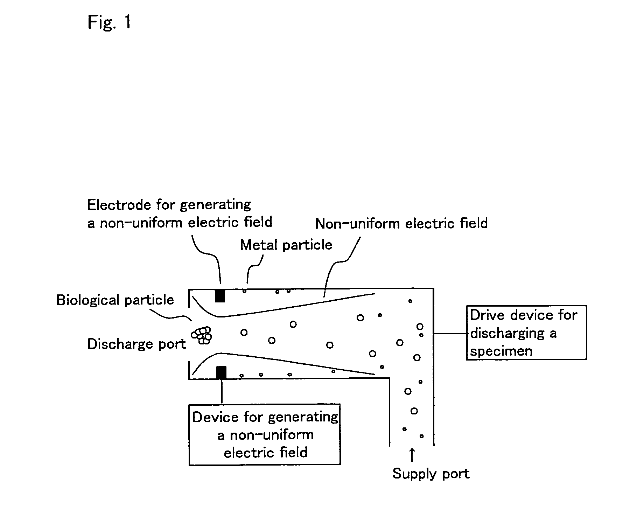

In the present invention, the device for discharging a liquid specimen includes a cylinder having a discharge port for a liquid specimen and a supply port for the liquid specimen and discharging means for discharging the liquid specimen provided in the vicinity of the supply port of the cylinder, and a means for generating a non-uniform electric field in the internal space of the cylinder is provided in the cylinder (see Fig. 1).

Fig. 1 is a schematic view of a device for discharging a liquid specimen of the present invention when discharging a liquid specimen containing biological particles as a target substance and metal particles as impurities in a medium. The liquid specimen is introduced from the supply port to the cylinder, and moves in the direction toward the discharge port. In the vicinity of the discharge port, an arbitrary non-uniform electric field is formed in the internal portion of the cylinder by electrodes for generating a non-uniform electric field that are provided in the cylinder. Therefore, for example, the biological particles are gathered in the vicinity of the central axis of the cylinder by dielectrophoresis force and the metal particles are distributed in the vicinity of the inner wall of the cylinder by adjusting the dielectric constant and the conductivity of the medium to an appropriate value. When the discharging means is driven in this state, a liquid specimen that contains the biological particles but is free from the metal particles can be discharged from the discharge port.

The discharging means of the specimen may allow the liquid specimen to be discharged in the form of a continuous flow or liquid drops. A drive device that allows the liquid specimen to be discharged in the form of a trace amount of liquid drops is preferable, and such a device can typically be an inkjet drive device. When an inkjet drive device is used, trace amounts of the liquid specimen can be discharged. Furthermore, the liquid specimen can be discharged at high speed, and the through-put can be improved.

There is no particular limitation regarding the material of the cylinder of the device for discharging a liquid specimen of the present invention, as long as it is a solid insulating material, and the material can be selected in accordance with the specimen. For example, inorganic materials such as glass and ceramics; and organic materials such as thermoplastic resin and thermosetting resin can be used. Polyethylene, polystyrene, vinyl chloride resin, vinyl acetate resin, acrylic resin, polypropylene, polycarbonate, polyester resin, phenol resin, guanamine resin, melamine resin, polyether ether ketone, polysulphone, polyether sulphone, polyimide resin, epoxy resin, polycarbodiimide resin, furan resin, furfural resin or the like can be used in view of easy molding. Among these, chemical resistant and corrosion resistant resins are preferable. The port diameter of the discharge port of the cylinder can be determined as appropriate in accordance with the specimen, and for example, a size of 1 μm to 100 μm is preferable. The inner diameter and the length of the cylinder can be determined as appropriate in accordance with the size and the number of the electrodes described later. There is no particular limitation regarding the sectional shape of the cylinder, and it may be circular, elliptic, or polygonal such as rectangular.

The means for generating a non-uniform electric field that is provided in the cylinder includes electrodes. In the case of electrodes, there is no particular limitation regarding the material, as long as it is a conductive material. For example, amorphous carbon, a material for forming a thin film electrode such as indium oxide, metals such as gold, silver and copper or the like can be used. Amorphous carbon, indium oxide and copper can be preferably used in view of easy formation of electrodes.

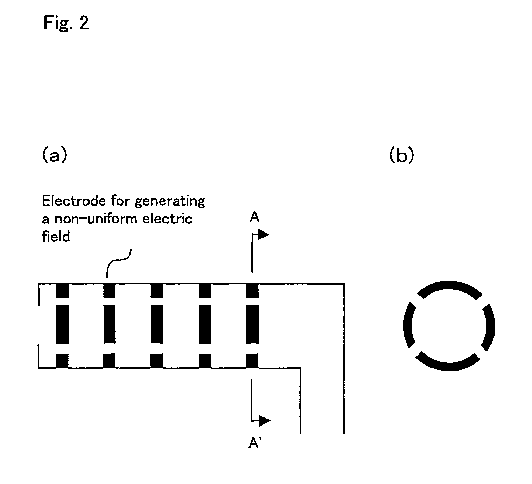

The electrode for generating a non-uniform electric field may be embedded in the wall of the cylinder, but it is preferable that the surface of the electrode is exposed or projected to the internal space of the cylinder, because the dielectric characteristics of the substance can be controlled precisely. As shown in Fig. 1, the electrodes are preferably provided such that an electric field is generated perpendicular to the central axis of the cylinder. Fig. 2 will be described, taking a tubular cylinder as an example. Fig. 2(a) is a schematic transparent view in the direction parallel to the central axis of the cylinder. Fig. 2(b) is a schematic cross-sectional view taken along the line A-A' of Fig. 2(a). The electrodes are provided in a concentric circular manner (concentric axis symmetry) along the inner wall of the cylinder. The electrodes may be multielectrodes whose shape is obtained by dividing a concentric circle into several portions, as shown in Fig. 2, and may have a shape of a series of concentric circles. As the multipolarity is increased, a trace amount of a target substance in a liquid specimen can be controlled at a low applied voltage.

As described above, the electrodes for generating a non-uniform electric field are provided so as to be exposed to the internal space of the cylinder. These electrodes can be formed by, for example, a method of irradiating resin having a high content of carbon (preferably 60 wt % or more, and more preferably 70 wt% or more) (e.g., phenol resin, polyimide resin) with laser light to deposit the carbon and utilizing the deposited carbon as an electrode. Alternatively, the electrodes can be formed by providing a conductive thin film on a nonconductive material (plastic, glass, ceramics, etc.) and laminating this.

The cylinder having electrodes of the latter can be produced by, for example, obtaining a plurality of divided insulating members constituting the wall of the cylinder, using a mold in which a cavity and/or a core having a micrometer to nanometer size is provided on a surface of a substrate selected from the group consisting of ceramics, intermetallic compounds, glass, and amorphous carbon; coating at least one divided face of the insulating member with a conductive material; and laminating the coated insulating members and joining the divided faces. In this method, the cylinder can be produced by coating the insulating member obtained by molding with a mold with a conductive material, and then joining the insulating members. The divided insulating members can be obtained by cutting an insulating member after molding. After at least one divided face of the insulating members is coated with a conductive material, they are joined. In this case, a portion coated with the conductive material can become a conductive member. There is no particular limitation regarding the coating method, and plating, sputtering, ion plating, or CVD can be used for example, and the method can be determined as appropriate in accordance with the insulating member and the conductive member to be subjected to coating. The thickness of the coating can be determined as appropriate so as to serve as an electrode.

Alternatively, the cylinder can be formed by using a conductive member formed into a desired shape as an electrode, and laminating this conductive member and an insulating member.

Such a cylinder can be produced by, for example, obtaining a plurality of divided insulating members constituting the wall of the cylinder, using a mold in which a cavity and/or a core having a micrometer to nanometer size is provided on a surface of a substrate selected from the group consisting of ceramics, intermetallic compounds, glass, and amorphous carbon; obtaining conductive members having a shape that can be sandwiched between the insulating members, using a mold in which a cavity and/or a core having a micrometer to nanometer size is provided on a surface of a substrate selected from the group consisting of ceramics, intermetallic compounds, glass, and amorphous carbon; and laminating and joining the insulating members and the conductive members. That is to say, the cylinder can be produced by obtaining both the insulating members and the conductive members using a mold, and joining them.

The method for producing a cylinder in this manner will be described briefly below.

First, an insulating material or a conductive material serving as the material of the cylinder is dissolved or dispersed in an appropriate solvent, and injected to a mold, for example, using an inkjet nozzle, and if necessary, the mold is heated or the pressure is reduced so as to evaporate the solvent. This operation is repeated until the mold is filled with the cylinder material. When the cylinder is filled with the cylinder material, molding is performed by methods such as solidification, curing, polymerization, melting, sintering or the like alone or in combination as required, so that an insulating member or a conductive member can be obtained as the desired molded product. It is preferable to produce the insulating member or the conductive member under atmospheric pressure or reduced pressure. In the case of atmospheric pressure, when the mold is pre-heated, the solvent can be evaporated immediately, so that the cylinder material can be injected continuously. When amorphous carbon or an intermetallic compound is used as the mold, it can be used as a heat generator simply by sending electric current thereto.

Alternatively, a conductive member only whose size and outline are controlled with a mold is obtained, and then is cut with focused ion beams (FIB), so that a conductive member having a desired microstructure can be obtained. More specifically, a disk (e.g., a diameter: 200 μm, a thickness: 10 to 20 μm) made of a conductive material such as amorphous carbon and metal (e.g., copper) is used as the conductive member, and a hole (bore) having an arbitrary shape to be exposed to the internal space of the cylinder is formed in the central portion thereof.

The obtained insulating member or conductive member can be subjected to the following joining step without any further treatment. Alternatively, the obtained insulating member or conductive member can be cut, and for example, made into a thin piece, and then subjected to a joining step. There is no particular limitation regarding the cutting means, and for example, a laser, FIB or the like can be used.

The insulating members or conductive members are then joined such that the conductive member is sandwiched by the insulating members. The joining means can be selected as appropriate in accordance with the type of the insulating member and the conductive member. For example, a method of using an organic or inorganic adhesive or a method of brazing can be used.

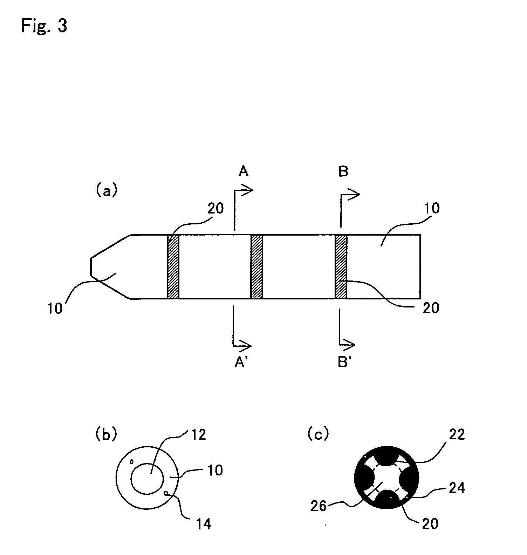

The case where the insulating member and the conductive member obtained by molding in the above-described manner are joined will be described more specifically with reference to Fig. 3.

Fig. 3(a) is a schematic front view of the cylinder provided with electrodes on the inner wall. The insulating member 10 constituting the wall of the cylinder is divided into four in Fig. 3(a). The divided insulating members 10 are arranged so as to sandwich conductive members 20. These members are joined by the joining means as described above. The faces to be joined may be smooth or provided with appropriate irregularity so as to be engaged. Fig. 3(b) is a schematic cross-sectional view taken along the line A-A' of the insulating member in Fig. 3(a). Fig. 3(c) is a schematic cross-sectional view taken along the line B-B' of the conductive member 20 in Fig. 3(a). As shown in Fig. 3(b), the insulating member 10 is provided with a through-hole 12 for forming the internal space of the cylinder. As shown in Fig. 3(c), the conductive member 20 is provided with a through-hole 26 for forming the internal space of the cylinder, and electrodes 22 provided on the inner wall of the cylinder are provided, for example, so as to be projected to the through-hole 26. In this case, the electrodes 22 are projected to the internal space of the cylinder so that the concentric circle is divided into several portions. The cross-sectional shapes of the insulating member 10 and the conductive member 20 may be exactly the same, and in this case, the electrode 22 is exposed along the entire circumference of the inner wall. Alternatively, for example, if the insulating member 10 is made of a polymer corresponding to an amorphous carbon precursor, then the conductive member 20 may not have to be exposed or projected to the outer wall of the cylinder. In this case, it is possible to form an electrical circuit from the electrode 22 to the outer wall of the cylinder by depositing carbon by focusing and irradiation of laser light. Furthermore, in order to join the insulating members 10 or the conductive members 20 in an exact position, holes 14 and 24 for alignment may be provided in each member. Alternatively, as a hole for alignment, the internal space of the cylinder, which is channel for a liquid specimen, can be used.

After joining, for example, in order to ensure insulation between the electrodes exposed to the internal space of the cylinder in the conductive member sandwiched by the insulating members, the outer wall of the cylinder may be cut off in any depth, using FIB or the like. For example, it is preferable that in the cross-section of Fig. 3(c), the conductive members between the electrodes 22 are cut off from the outer wall side so that each electrode 22 is insulated. Thus, each of the insulated electrodes 22 is provided with a wire as appropriate from the outer wall side so as to be connected to the device for generating a non-uniform electric field. Thus, electrodes 22 are sent with electric current through the wires so that a non-uniform electric field can be generated in the internal space of the cylinder.

The device for discharging a liquid specimen of the present invention can be obtained by attaching an appropriate discharging means in the vicinity of the supply port for a liquid specimen of the cylinder as described above.

When the device of the present invention is used, the size of a substance in the liquid specimen to be discharged can be controlled by changing the strength of the non-uniform electric field formed in the internal space of the cylinder. Herein, "size" refers the magnitude (volume) and/or the number of an object. The volume can be controlled by adjusting the voltage to be applied to each electrode. For example, in the case of negative dielectrophoresis, the size (volume) of a substance in a specimen to be discharged can be reduced by raising the voltage. The number can be controlled by adjusting the number or the distance of the electrodes provided in the cylinder. The formation of a non-uniform electric field in the cylinder can be regulated by pre-inputting the dielectric characteristics of the substance contained in the liquid specimen on a computer, and thereby a liquid specimen containing a substance having a precisely desired size can be discharged. When an inkjet drive device is used as the discharging means, settings are possible such that a target substance is always contained in one drop to be discharged. For example, it is possible to discharge a substance in one molecule level or one cell level by controlling the voltage strength and the frequency of each electrode, the interval of portions having a strong electric field strength distribution, and the discharge amount and the driving cycle of ink-jetting. Furthermore, as in the example shown in Fig. 1, nozzle clogging due to aggregation of particles in a liquid specimen can be prevented.

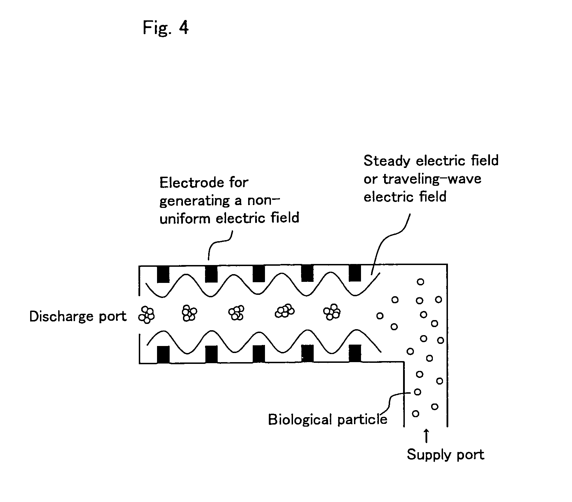

For the electrodes for generating a non-uniform electric field, a plurality of electrodes can be provided at a predetermined interval in the direction of the central axis of the cylinder. The voltage to be applied to each electrode can be adjusted so that a plurality of portions having a strong non-uniform electric field strength and portions having a weak non-uniform electric field strength are present in the central axis of the cylinder (see Figs. 4 to 6).

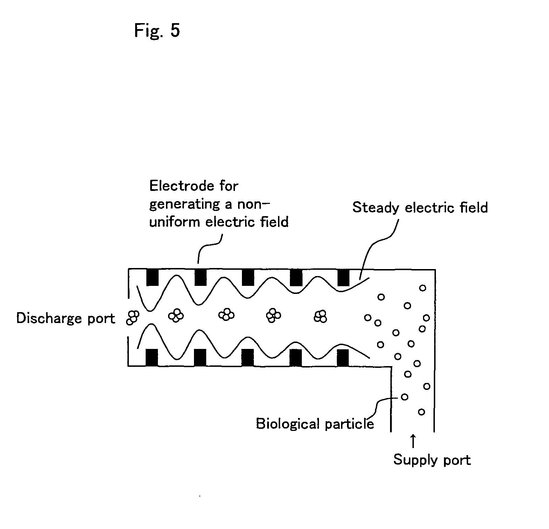

For example, as shown in Fig. 4, a steady electric field can be formed by allowing the strength of a voltage applied to each electrode to be equal. The target substance in the liquid specimen is gathered in the vicinity of the central axis of the cylinder, where the strength of the steady electric field is weak. Then, for example, an inkjet drive device is driven to discharge the liquid specimen always containing the gathered target substance in the form of liquid drops sequentially, so that a uniform liquid specimen can be discharged continuously at high speed. As shown in Fig. 5, a steady electric field may be used, in which portions having a strong non-uniform electric field strength distribution are attenuated from the discharge port to the supply port of the cylinder, and the distance between the strong portion and the weak portion is broadened.

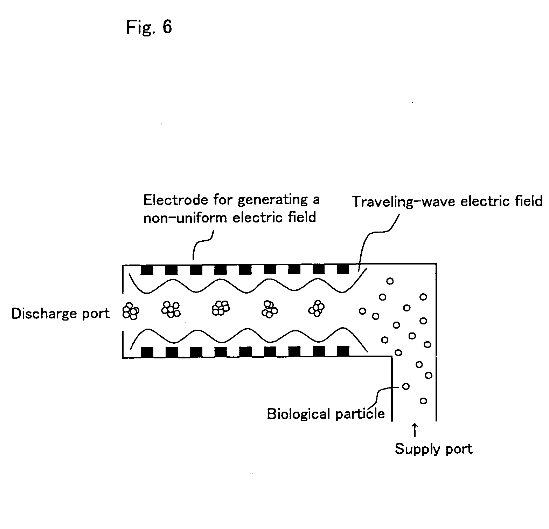

A traveling-wave electric field may be formed so that a target substance moves in the direction from the supply port to the discharge port for the liquid specimen. "Traveling-wave electric field" refers to an electric field in which when one portion having a strong electric field is focused, this portion having a strong electric field moves from the supply port to the discharge port. The traveling-wave electric field is formed by applying a voltage to the electrodes provided in the cylinder at the same cycle at a timing that are delayed sequentially in the direction from the supply port to the discharge port for the liquid specimen. Thus, the target substance moves from the supply port to the discharge port for the liquid specimen. For example, in the case of Fig. 4, aggregates of the target substance are arranged at an interval equal to that of the electrodes that are adjacent to each other in the direction of the central axis of the cylinder and move sequentially toward the discharge port. In the case of Fig. 6, since portions having a strong electric field strength distribution are formed at positions of the electrodes that are not adjacent, the distance between the aggregates of the target substance that are aligned in the direction of the central axis of the cylinder can be increased. The target substance that is gathered in the cylinder can be delivered smoothly toward the discharge port at a predetermined speed and be discharged by forming the traveling-wave electric field. In order that the target substance is always contained in one drop of the liquid specimen to be discharged, it is preferable that the cycle of the traveling-wave electric field is equal to the driving cycle of the inkjet drive device, and further that the phase difference between this electric field cycle and the driving cycle is less than one wavelength. The generation of the electric field and the discharge driving can be operated in cooperation easily by computer control.

Industrial Applicability

According to the present invention, a target substance contained in a liquid specimen can be discharged selectively based on the dielectric characteristics. For example, it is possible to distinguish biological particles from metal particles. This can be achieved by adjusting the dielectric constant and the conductivity of a medium to an appropriate value. Furthermore, nozzle clogging is prevented and the substance in the specimen is prevented from being adsorbed onto the inner wall of the cylinder by gathering biological particles in the central axis of the cylinder. It is also possible to ensure that the target substance is always contained in one drop to be discharged. In other words, the specimen to be discharged in the medium can be made uniform to a high degree. Moreover, it is also possible to discharge the substance in one molecule level or one cell level.

**Claims**

1. A method for discharging a liquid specimen in means for discharging a liquid specimen provided with a cylinder having a discharge port for a liquid specimen and a supply port for the liquid specimen, comprising the step of generating a non-uniform electric field in an internal space of the cylinder to discharge the liquid specimen.

2. The method according to claim 1, wherein the liquid specimen is discharged in a form of a liquid drop.

3. The method according to claim 2, wherein the means for discharging a liquid specimen is an inkjet drive device.

4. The method according to any one of claims 1 to 3, wherein a size of a target substance in the liquid specimen to be discharged is controlled by changing the non-uniform electric field.

5. The method according to any one of claims 1 to 4, wherein a strength distribution of the non-uniform electric field has a plurality of strong and weak portions.

6. The method according to claim 5, wherein the non-uniform electric field is a steady electric field.

7. The method according to claim 6, wherein in the strength distribution of the non-uniform electric field, the strong portions are attenuated and a distance between a strong portion and a weak portion is increased in a direction from the discharge port to the supply port of the cylinder.

8. The method according to claim 5, wherein the non-uniform electric field is a traveling-wave electric field.

9. The method according to claim 8, wherein a cycle of the traveling-wave electric field is equal to a driving cycle of the inkjet drive device, and a phase difference between the electric field cycle and the driving cycle is less than one wavelength.

10. A device for discharging a liquid specimen comprising a cylinder having a discharge port for a liquid specimen and a supply port for the liquid specimen and discharging means for discharging the liquid specimen provided in a vicinity of the supply port of the cylinder, wherein a means for generating a non-uniform electric field in an internal space of the cylinder is provided in the cylinder.

11. The device according to claim 10, wherein the discharging means is an inkjet drive device.

12. The device according to claim 10 or 11, wherein the means for generating a non-uniform electric field is an electrode for generating a non-uniform electric field, and a plurality of electrodes are provided at a predetermined interval in concentric axis symmetry on an inner wall of the cylinder.

Fig. 1

Electrode for generating
a non-uniform electric field          Non-uniform electric field

Metal particle

Biological particle

Discharge port          Drive device for
discharging a
specimen

Device for generating
a non-uniform
electric field

Supply port

Fig. 2

(a)

(b)

Electrode for generating
a non-uniform electric
field

A

A'

Fig. 3

(a)

A          B

20          10

10          20

(b)          (c)

12          22

10          24

14          26          20

Fig. 4

Electrode for generating a non-uniform electric field

Steady electric field or traveling-wave electric field

Discharge port

Biological particle

Supply port

Fig. 5

Electrode for
generating a non-
uniform electric field

Steady electric field

Discharge port

Biological particle

Supply port

Fig. 6

Electrode for generating a
non-uniform electric field

Traveling-wave electric field

Discharge port

Biological particle

Supply port

## INTERNATIONAL SEARCH REPORT

| International application No. |
| --- |
| PCT/JP03/16411 |

A. CLASSIFICATION OF SUBJECT MATTER
    Int.Cl⁷  G01N1/00

According to International Patent Classification (IPC) or to both national classification and IPC

B. FIELDS SEARCHED

Minimum documentation searched (classification system followed by classification symbols)
    Int.Cl⁷  G01N1/00-1/44, G01N35/00-35/10, B41J2/00-3/62

Documentation searched other than minimum documentation to the extent that such documents are included in the fields searched
    Jitsuyo Shinan Koho        1922-1996    Toroku Jitsuyo Shinan Koho    1994-2004
    Kokai Jitsuyo Shinan Koho  1971-2004    Jitsuyo Shinan Toroku Koho    1996-2004

Electronic data base consulted during the international search (name of data base and, where practicable, search terms used)
    JOIS(JICST FILE)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2002-336678 A  (Shimadzu Corp.),<br>26 November, 2002 (26.11.02),<br>Full text; all drawings<br>Full text; all drawings<br>(Family: none) | 1-3,6,10,11<br>4,5,7-9,12 |
| Y | JP 2000-272132 A  (Fuji Xerox Co., Ltd.),<br>03 October, 2000 (03.10.00),<br>Full text; all drawings<br>(Family: none) | 1-3,6,10,11 |
| Y | JP 2002-40036 A  (Mitsubishi Chemical Corp.),<br>06 February, 2002 (06.02.02),<br>Full text; all drawings<br>(Family: none) | 1-3,6,10,11 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    07 April, 2004 (07.04.04) | Date of mailing of the international search report<br>    27 April, 2004 (27.04.04) |
| --- | --- |
| Name and mailing address of the ISA/<br>    Japanese Patent Office | Authorized officer |
| Facsimile No. | Telephone No. |

Form PCT/ISA/210 (second sheet) (July 1998)

**INTERNATIONAL SEARCH REPORT**

| International application No. |
| --- |
| PCT/JP03/16411 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 9-271379 A (Moritex Corp.),<br>21 October, 1997 (21.10.97),<br>Full text; all drawings<br>(Family: none) | 5,12 |
| A | JP 2000-508574 A (University of wales Bangor),<br>11 July, 2000 (11.07.00),<br>Full text; all drawings<br>& WO 97/34689 A | 8 |

Form PCT/ISA/210 (continuation of second sheet) (July 1998)